# EUROPEAN PATENT SPECIFICATION

(11) **EP 3 342 655 B1**
(45) Date of publication and mention of the grant of the patent: **30.10.2019**
(21) Application number: 17202804.5
(22) Date of filing: 21.11.2017
(51) Int. Cl.: B60T 17/22, B60T 13/66, B60T 8/00, B60T 13/14, B60T 13/74, B60T 7/04, B60T 8/40, B60T 13/68, B60T 11/16

(54) **VEHICLE BRAKE SYSTEM AND METHOD FOR OPERATING A VEHICLE BRAKE SYSTEM**
FAHRZEUGBREMSSYSTEM UND VERFAHREN ZUM BETREIBEN EINES FAHRZEUGBREMSSYSTEMS
SYSTÈME DE FREINAGE DE VÉHICULE ET PROCÉDÉ DE FONCTIONNEMENT D'UN SYSTÈME DE FREINAGE DE VÉHICULE

(30) Priority: 27.12.2016 US 201615391410
(43) Date of publication of application: 04.07.2018
(73) Proprietor: Robert Bosch GmbH, 70442 Stuttgart (DE)
(72) Inventor: Zhou, Wenguang, Novi, MI 48375 (US); Foitzik, Bertram, 74360 Ilsfeld (DE); Wu, Kevin, Novi, MI 48377 (US)

(56) References cited:
- EP-A2- 1 219 516
- DE-A1-102011 079 454
- US-A1- 2015 035 353
- US-A1- 2015 344 012

## Description

### BACKGROUND

The present invention relates to vehicles and vehicle braking systems.

Conventional brake-by-wire braking systems normally utilize electrically powered systems to effect vehicle braking at brake cylinders. Such braking systems often include a mechanical back-up in which the master cylinder produces a limited deceleration potential dependent upon the physical configuration of the master cylinder.
EP 1219516 A2 discloses a braking system including a hydraulically operated brake cylinder for operating a brake, a master cylinder operable according to an operation of a manually operable brake operating member, to pressurize a working fluid, a master-cylinder cut-off valve connected to the master cylinder, a high-pressure source including a power-operated pressure-control cylinder disposed between the master-cylinder cut-off valve and the brake cylinder and operable according to the operation of the brake operating member, to pressurize the fluid, the high-pressure source including a power-operated drive device and a pressure-control cylinder a control piston which is operable by the power-operated drive device and which partially defines on respective front and rear sides thereof a front control-pressure chamber connected to the brake cylinder, and a rear pressure chamber which is held in communication with the master cylinder, and a braking-pressure control device operable to control the power-operated drive device, to thereby control the pressure of the fluid in the brake cylinder.
US 2015/344012 A1 discloses a method for boosting the brake force of an electrohydraulic motor vehicle brake system in a mode in which an actuating force on a brake pedal acts upon a brake master cylinder of the brake system by a mechanical push-through, comprising the steps: determining a value of a first variable that is indicative of a current vehicle deceleration, on the basis of the value of the first variable, determining a value of a second variable that is indicative of the actuating force, on the basis of the value of the second variable, determining a required brake force boost, and controlling an electromechanical actuator, which acts upon the master cylinder, to achieve the required brake force boost.
US 2015/035353 A1 discloses a brake system having an electrohydraulic pressure and volume setting device, which electronically emits a brake system pressure under control, and a pressure modulation unit having, for each wheel brake, inlet and outlet valves for setting wheel-specific brake pressures. For setting wheel-specific brake pressures, the inlet and outlet valves are actuated analogously by being energized by different electrical currents, in order to assign a pressurizing agent volume flow provided by the pressure and volume setting device to the wheel brakes that have a pressure change requirement.
DE 102011079454 A1 discloses a brake-by-wire type electro-hydraulic brake system comprising a brake actuating element, and a brake master cylinder. A simulator is hydraulically connected with a displaceable simulator piston, in an actuation direction against a spring element. An actuator position sensor and a pressure sensor detect an operation by the brake actuation element for expressed desire to brake. A pressure source is controlled for setting up of brake pressure, where a blocking actuator is provided with a movable drive device locking element. An independent claim is included for a method for operating a brake-by-wire type electro-hydraulic brake system.

### SUMMARY

In one aspect, the invention provides a vehicle brake system having the features of claim 1.

In another aspect, the invention provides a method of operating a vehicle brake system having the features of claim 10.

Other aspects of the invention will become apparent by consideration of the detailed description and accompanying drawings.

### BRIEF DESCRIPTION OF THE DRAWINGS

Fig. 1 is a schematic representation of a vehicle with two axles.
Fig. 2 schematically illustrates a brake system of the vehicle of Fig. 1.
Fig. 3 schematically illustrates the vehicle brake system operating in a first mode.
Fig. 4 schematically illustrates the vehicle brake system operating in a secondary mode.
Fig. 5 is a graph illustrating a relationship between pedal travel and target piston pressure.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

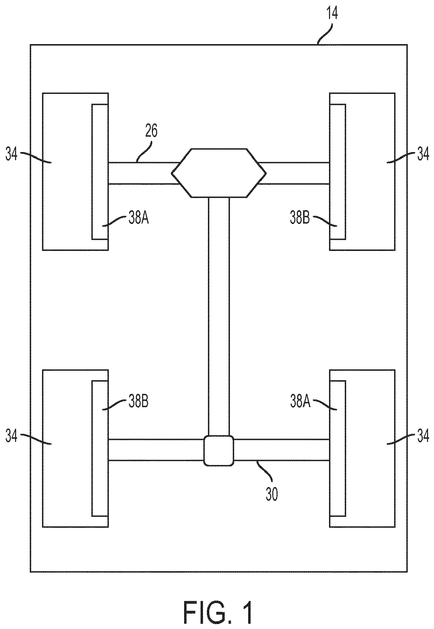

Figs. 1-2 illustrate a vehicle 14 including a brake system 10. The brake system 10 is an integrated power braking system that incorporates a tandem master cylinder 42, a pedal feel simulator 62, an electronically-controlled pressure generating unit 70, and a group of valves (e.g., isolation and control valves 78, 82, 86, 90) into a single housing 12. Further, no booster is located between the tandem master cylinder 42 and a brake pedal 46 coupled to provide an input to the tandem master cylinder 42.

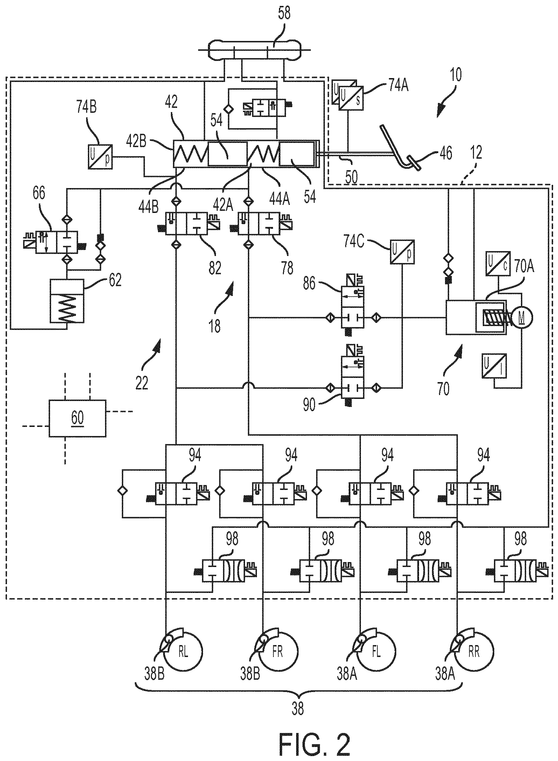

The brake system 10 includes two hydraulic circuits 18, 22, including a first hydraulic circuit 18 and a second hydraulic circuit 22. As shown in Fig. 1, the vehicle includes a front axle 26 and a rear axle 30. Each hydraulic circuit 18, 22 may provide braking to a single axle 26, 30, or may provide braking to a wheel 34 that rotates with the front axle 26, and a wheel 34 that rotates with the rear axle 30. As shown in Fig. 1 in the context of a four-wheeled vehicle, each axle 26, 30 may rotate with two wheels 34. Alternatively, each axle 26, 30 may rotate with only a single wheel 34 or more than two wheels 34. The axles 26, 30 define individual positions spaced apart in a direction of travel of the vehicle 14. A brake cylinder 38 is located at each wheel 34 and may, for example, actuate a caliper to squeeze a brake disc that is rotatable with the associated wheel 34. The first hydraulic circuit 18 provides hydraulic brake fluid to a first subset 38A of the brake cylinders 38 and the second hydraulic circuit 22 provides hydraulic brake fluid to a second subset 38B of the brake cylinders 38. As shown in Fig. 2, each subset 38A, 38B includes two brake cylinders 38. The first subset 38A includes the front left brake cylinder 38 (e.g., driver-side, front axle brake cylinder) and the rear right brake cylinder 38 (e.g., passenger-side, rear axle brake cylinder). The second subset 38B includes the front right brake cylinder 38 (e.g., passenger-side, front axle brake cylinder) and the rear left brake cylinder 38 (e.g., driver-side, rear axle brake cylinder). In an alternative embodiment, the first and second hydraulic circuits 18, 22 may provide braking to the second and first subsets 38B, 38A of brake cylinders 38, respectively. Further, it is to be understood that the relationship between directions "right" and "left" and "driver-side" and "passenger-side" is for example only, and is otherwise dependent upon the individual vehicle.

As shown in Fig. 2, a tandem master cylinder 42 is located upstream of the hydraulic circuits 18, 22 and receives a user input force via the brake pedal 46. The tandem master cylinder 42 converts the input force into hydraulic pressure within first and second master cylinder chambers 42A, 42B to produce increased hydraulic pressure within the hydraulic circuits 18, 22, respectively. More specifically, the brake pedal 46 translates a pushrod 50 and plungers 54 within the tandem master cylinder 42 to move fluid in the chambers 42A, 42B into the hydraulic circuits 18, 22 via master cylinder outlets 44A, 44B, respectively. When un-actuated, the tandem master cylinder 42 is in communication with a reservoir 58, such that the pressure within the chambers 42A, 42B is at reservoir pressure (e.g., atmospheric pressure).

The first and second circuits 18, 22 are provided with master cylinder isolation valves 78, 82, respectively. The master cylinder isolation valves 78, 82 are two-position valves, operable to transition between an open position and a closed position. Alternatively, the valves 78, 82 may be proportional valves (e.g., controlled via pulse-width modulation) such that they provide a variable flow opening ranging from a closed position to a fully open position, including a plurality of intermediate positions therebetween. When the valves 78, 82 are in the closed position, the fluid from the master cylinder chambers 42A, 42B cannot reach the brake cylinders 38 and is therefore directed towards a pedal feel simulator 62.

The pedal feel simulator 62 is located downstream of the tandem master cylinder 42 and is fluidly connected to the first circuit 18. A pedal feel simulator control valve 66 is positioned between the pedal feel simulator 62 and the tandem master cylinder 42 to selectively open or close the fluid path between the same. When in fluid communication with the tandem master cylinder 42, the pedal feel simulator 62 provides a reaction force at the brake pedal 46 in response to the force provided by the pressurized hydraulic fluid to mimic the reaction force otherwise provided when the tandem master cylinder 42 communicates directly with the brake cylinders 38.

The brake system 10 further includes an electronically-controlled pressure generating unit 70 separate from the tandem master cylinder 42. The pressure generating unit 70 provides a braking force to the brake cylinders 38 when the master cylinder isolation valves 78, 80 are in the closed position and may be mechanical, hydraulic, or mechatronic. The electronically-controlled pressure generating unit 70 has a greater fluid storage volume than the master cylinder 42 such that actuation of the pressure generating unit 70 is capable of displacing more fluid than the master cylinder 42. As shown, the pressure generating unit 70 is a motor-driven piston 70A. Alternatively, the pressure generating unit 70 may be, for example, a hydraulic accumulator or a pump. The pressure generating unit 70 produces a hydraulic pressure or output force proportional to a sensed input value. The input value may be the travel distance of the brake pedal 46 or pushrod 50, the input force provided by the user at the brake pedal 46, or the fluid pressure from the tandem master cylinder 42. Accordingly, various sensors (e.g., pedal force or travel sensor 74A, master cylinder pressure sensor 74B) measure the input value and relay the value to a controller 60. The pedal sensor 74A and the master cylinder pressure sensor 74B may be located on independent electrical circuits such that one may function as a back-up to the other. Collectively, the pedal sensor 74A and the master cylinder pressure sensor 74B can detect hard pedal issues based on a relationship between the measured fluid pressure and the force applied to or travel of the pedal 46. In turn, the pressure generating unit 70 is operated by the controller 60 to pressurize hydraulic fluid within the hydraulic circuits 18, 22 in proportion to the sensed input value.

The first and second circuits 18, 22 are further provided with pressure generating unit control valves 86, 90, respectively. The pressure generating control valves 86, 90 are two-position valves, operable to transition between an open position and a closed position. Alternatively, the valves 86, 90 may be proportional valves (e.g., controlled via pulse-width modulation) such that they provide a variable flow opening ranging from a closed position to a fully open position, including a plurality of intermediate positions therebetween. If the valves 86, 90 are in the closed position, the fluid from the pressure generating unit 70 cannot reach the brake cylinders 38.

Additional valves control the flow to and from each brake cylinder 38. Inlet valves 94 are proportional valves such that they provide a variable flow opening ranging from a closed position to a fully open position, including a plurality of intermediate positions therebetween to regulate the braking force at each brake cylinder 38 independently. Outlet valves 98 include a restrictive opening for selectively returning fluid from the brake cylinders 38 to the reservoir 58 and may, for example, assist with wheel anti-slip control.

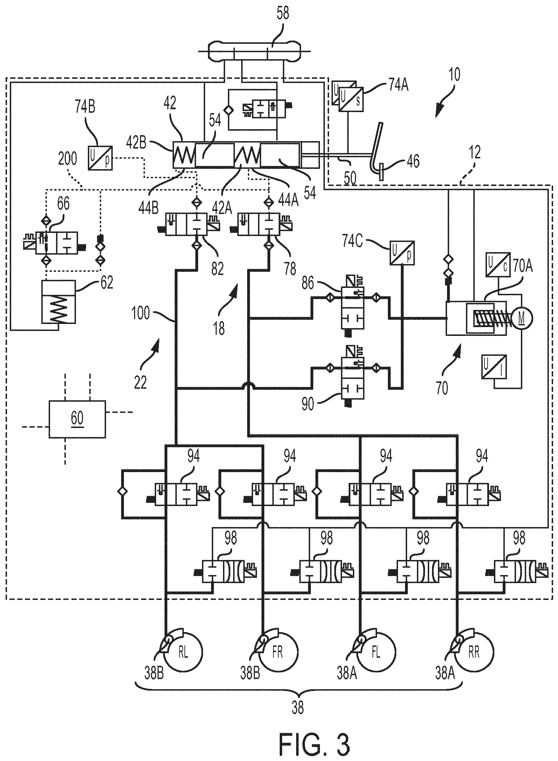

The brake system 10 is operable in a primary mode or configuration for normal brake-by-wire operation. In the primary mode, the electronically-controlled pressure generating unit 70 provides a braking force to all of the brake cylinders 38, including those in the first and second subsets 38A, 38B of brake cylinders 38. The braking force is provided in proportion to a driver's request in the normal operation, where the tandem master cylinder 42 is isolated from the brake cylinders 38 by the isolation valves 78, 82. Such braking is illustrated in Fig. 3, with the pressurized fluid from the pressure generating unit 70 illustrated with bolded lines 100 and the pressurized fluid from the tandem master cylinder 42 illustrated with dotted lines 200.

In the primary mode, the user provides an input to the brake pedal 46, which translates the pushrod 50 and plunger 54, thereby moving fluid to the hydraulic circuits 18, 22. The pedal feel simulator control valve 66 is an open position. Therefore, as indicated by dotted lines 200, the fluid pressure supplied by the tandem master cylinder 42 is provided to the pedal feel simulator 62.

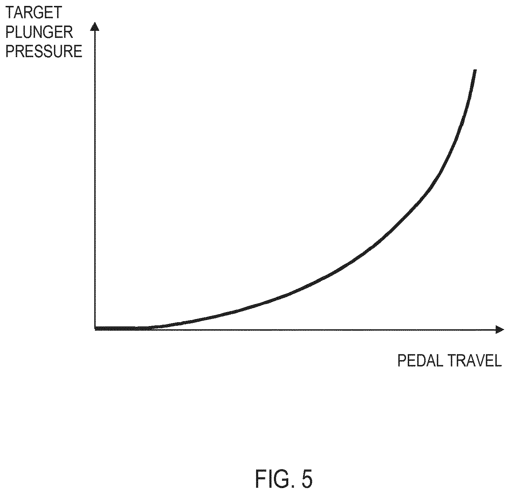

Concurrently, the pressure generating unit 70 is actuated by an output signal from the controller 60, in response to an input signal corresponding to the sensed value indicative of and proportional to the user input. The pedal travel (i.e., displacement of the brake pedal 46) is measured by the pedal travel sensor 74A and is transformed to a target piston pressure via the controller 60. The target piston pressure is associated with a specific pedal travel, for example, as shown in the graph of Fig. 5. The controller 60 converts the target piston pressure to a target motor speed and actuates a motor M (e.g., a three-phase brushless DC motor) to achieve the target motor speed. The target motor speed is variable and is adjusted with respect to time to accomplish an overall desired piston position capable of providing the target piston pressure. The piston 70A is driven by the motor M to produce increased hydraulic pressure at the brake cylinders 38 corresponding to the target piston pressure. Further, a pressure sensor 74C may measure the actual pressure of the hydraulic fluid (indicated by bolded lines 100) from the pressure generating unit 70 and provide a signal indicative of the pressure to the controller 60. The controller 60 may then compare the pressure measured by the sensor 74C to the target piston pressure. The pressure generating unit 70 may then increase or decrease the produced fluid pressure until the pressure measured by the sensor 74C matches the target piston pressure. The target piston pressure may be updated to reflect changes in the user input.

In the primary mode, the pressure generating unit control valves 86, 90 are actuated to open positions. Therefore, as indicated by bolded lines 100 in Fig. 3, the fluid pressure supplied by the pressure generating unit 70 is introduced into both the first hydraulic circuit 18 and the second hydraulic circuit 22 and is provided to the brake cylinders 38 corresponding with each. Therefore, in the primary mode, a hydraulic pressure from the pressure generating unit 70 is applied to all of the brake cylinders 38. The allowable flow rate through the control valves 86, 90 may be adjusted by the controller 60 to vary the pressure downstream of the control valves 86, 90.

Once a user removes pressure from the brake pedal 46 (e.g., removes foot from the brake pedal), the controller 60 instructs the piston 70A to return to an un-actuated state and the fluid returns to the pressure generating unit 70 via the open control valves 86, 90. The control valves 86, 90 are then returned to the closed position once fluid pressures are equalized.

The brake system 10 may transition from the primary mode to the second mode or back-up mode or configuration in response to a failure or malfunction of a component, such as one of the sensors 74A-74C (e.g., a missing signal from a sensor, a measurement outside a predetermined range, etc.), the simulator 62, or the simulator valve 66. For example, a failure of the simulator 62 or simulator valve 66 may prevent a proper pedal stroke, which may be identified by the controller 60 based on an increased pressure unassociated with an increased pedal travel. In response, the controller 60 sends a signal to transition the brake system 10 from the primary mode to the second mode.

However, the tandem master cylinder 42 contains a limited amount of fluid (i.e., the plungers 54 are only capable of a limited travel or translation within the tandem master cylinder 42). Because the system is primarily designed for brake-by-wire operation of the primary mode, the master cylinder volume may be quite small. Therefore, when the available fluid volume is spent and the plungers 54 bottom out, the tandem master cylinder 42 is not capable of providing any further increase in braking force. Although this technique has proven effective in practice to achieve minimum standards of deceleration in a second mode, further improvement in braking performance can be achieved with the layered second mode as described below.

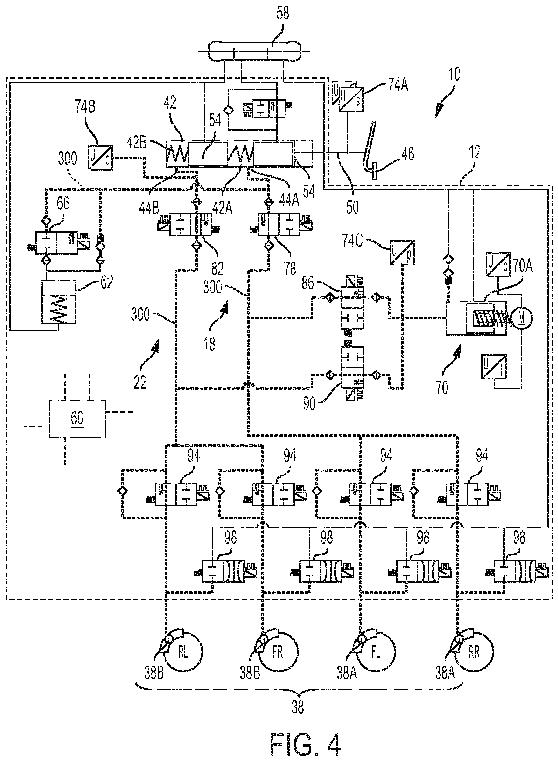

Rather than cease operation of the pressure generating unit 70 and rely on mechanical back-up solely from the tandem master cylinder 42, the secondary mode can provide a layered braking actuation, utilizing fluid from the tandem master cylinder 42 in combination with a fluid supplement from the pressure generating unit 70. In the secondary mode, as shown in Fig. 4, the user provides an input to the brake pedal 46, which translates the pushrod 50 and plunger 54, thereby moving fluid from the master cylinder chambers 42A, 42B to the hydraulic circuits 18, 22 and to all of the brake cylinders 38 through open isolation valves 78, 82. The pedal feel simulator control valve 66 is in the closed position so that fluid is not supplied from the tandem master cylinder 42 to the simulator 62.

In addition to the fluid supplied to the circuits 18,22 by the tandem master cylinder 42, the pressure generating unit 70 is actuated by the controller 60 and the control valves 86, 90 are opened to provide an additional quantity of fluid into the hydraulic circuits 18, 22, as indicated by dotted and bolded lines 300. With all of the isolation valves 78, 82 and control valves 86, 90 in open positions, the pressure generating unit 70 is in fluid communication with the brake cylinders 38 as well as the first and second master cylinder chambers 42A, 42B.

The controller 60 can actuate the pressure generating unit 70 to produce a fluid volume and/or fluid pressure value proportional to the user input to the brake pedal for addition to the hydraulic circuits 18, 22. The additional fluid is dependent upon the travel, force, or pressure measured by the sensors 74A, 74B. In other words, the pressure generating unit 70 is operated in a controlled manner to replicate or track proportionally with the input force of the driver to the brake pedal 46 as in a first mode or primary brake-by-wire mode. The layered second mode takes advantage of the pressure generating unit 70 to extend the ability beyond the fluid volume limitation inherent of the tandem master cylinder 42. The pressure generating unit 70, which provides brake-by-wire braking in the primary mode, functions as a volume booster for the master cylinder 42 in the second mode.

As the brake pedal 46 is depressed by an input force of a user, an increase in fluid volume from the pressure generating unit 70 is applied to displace the plungers 54 backwards and lift the brake pedal 46 against the user, providing additional stroke available to the user for increasing the manually-applied braking force. For example, the controller 60 may operate in a volume control mode to instruct the pressure generating unit 70 to displace a volume of fluid into the circuits 18, 22, the displaced volume dependent upon and proportional to the input force of the user. Once a user removes pressure from the brake pedal 46, the tandem master cylinder 42 returns to an un-actuated state and the controller 60 returns the piston 70A to an un-actuated state. The fluid in the circuits 18, 22 return to the pressure generating unit 70 via the open control valves 86, 90 and the tandem master cylinder 42 via the open isolation valves 78, 82.

In contrast to conventional back-up braking modes, the back-up braking mode illustrated in Fig. 4 and described above is not limited by the fluid volume of the tandem master cylinder 42. Therefore, with an equivalent master cylinder, the achievable deceleration is greater than that of a back-up braking mode which relies only on operator push-through of the master cylinder. Further, maintaining the push-through braking via the tandem master cylinder 42 to the brake cylinders 38 in both stages of the secondary mode allows the driver to directly modulate and maintain control of the total vehicle braking force.

## Claims

1. A vehicle brake system (10) comprising:
a brake pedal (46) operable to receive a user input force;
a master cylinder (42) operably coupled to the brake pedal (46) to be actuated thereby;
a brake cylinder (38) selectively coupled to the master cylinder (42) via a hydraulic circuit (18, 22);
an electronically-controlled pressure generating unit (70) distinct from the master cylinder (42);
a controller (60) operable to receive a signal indicative of the user input force to the brake pedal (46);
an isolation valve (78, 82) located between the master cylinder (42) and the brake cylinder (38), and
an inlet valve (94) located between the isolation valve (78, 82) and the wheel cylinder, the inlet valve (94) operable to regulate the braking force at the brake cylinder (38),
wherein, in a first mode, the controller (60) is operable to actuate the electronically-controlled pressure generating unit (70) to apply hydraulic fluid pressure to the brake cylinder (38) according to the signal, and
wherein, in a second mode, the master cylinder (42) is operable to actuate the brake cylinder (38) and the controller (60) is operable to actuate the electronically-controlled pressure generating unit (70) to supplement the master cylinder (42) and extend a fluid volume capacity of the master cylinder (42),
wherein, in the first mode, the isolation valve (78, 82) is closed to block a fluid path between the master cylinder (42) and the brake cylinder (38), and wherein, in the second mode, the isolation valve (78, 82) is open to provide the fluid path between the master cylinder (42) and the brake cylinder (38).

2. The vehicle brake system of claim 1, wherein, in the second mode, the master cylinder (42) is operable to actuate the brake cylinder (38) proportional to the user input force.

3. The vehicle brake system of claim 1, wherein the electronically-controlled pressure generating unit (70) is a motor-driven piston (70A).

4. The vehicle brake system of claim 3, wherein, in the second mode, the magnitude of displacement of the motor-driven piston (70A) is dependent upon the user input force.

5. The vehicle brake system of claim 1, wherein the brake pedal (46) is directly connected to the master cylinder (42) without a booster therebetween.

6. The vehicle brake system of claim 1, further comprising a sensor (74A, 74B) operable to provide the signal to the controller (60), wherein the sensor is one of a pressure sensor (74B), a pedal travel sensor (74A), or a pedal force sensor (74A).

7. The vehicle brake system of claim 1, further comprising a pedal feel simulator (62), wherein the master cylinder (42) is coupled in fluid communication with the pedal feel simulator (62) in the first mode.

8. The vehicle brake system of claim 1, further comprising a valve (86, 90) located between the electronically-controlled pressure generating unit (70) and the brake cylinder (38), wherein, in the first mode and the second mode, the valve (86, 90) is open to provide a fluid path between the electronically-controlled pressure generating unit (70) and the hydraulic circuit (18, 22).

9. The vehicle brake system of claim 1, wherein the controller (60) is operable to transition the brake system (10) from the first mode to the second mode in response to a signal indicative of a failure or malfunction.

10. A method of operating a vehicle brake system having a hydraulically actuated brake cylinder (38), the method comprising:
operating the vehicle brake system in a first mode in which fluid is applied to the brake cylinder (38) via an electronically-controlled pressure generating unit (70) in response to depression of a brake pedal (46),
identifying via a controller (60) that the vehicle brake system is inoperable in the first mode; and
subsequent to identifying that the vehicle brake system is inoperable in the first mode, operating the vehicle brake system in a second mode as follows when the brake pedal (46) is depressed:
opening a fluid path between a master cylinder (42) and the brake cylinder (38) through an isolation valve (78, 82) and an inlet valve (94), thereby actuating the brake cylinder (38) with the master cylinder (42); and
actuating the electronically-controlled pressure generating unit (70) with the controller (60) to extend a fluid volume capacity of the master cylinder (42).

11. The method of claim 10,wherein, in the second mode, the controller (60) operates in a volume control mode to actuate the electronically-controlled pressure generating unit (70) to displace a volume of fluid from the electronically-controlled pressure generating unit (70).

12. The method of claim 11, wherein, in the second mode, the electronically-controlled pressure generating unit (70) is actuated to output a fluid volume proportional to the travel of the brake pedal (46), dependent upon the user input force.

## Patentansprüche

1. Fahrzeugbremssystem (10), Folgendes umfassend:
ein Bremspedal (46), das eine Benutzereingabekraft empfangen kann;
einen Hauptzylinder (42), der mit dem Bremspedal (46) wirkverbunden ist, um davon betätigt zu werden;
einen Bremszylinder (38), der über einen Hydraulickreislauf (18, 22) selektiv mit dem Hauptzylinder (42) gekoppelt ist;
eine elektronisch gesteuerte Druckerzeugungseinheit (70), die sich vom Hauptzylinder (42) unterscheidet;
eine Steuerung (60), die ein Signal empfangen kann, das die Benutzereingabekraft auf das Bremspedal (46) anzeigt;
ein Sperrventil (78, 82), das sich zwischen dem Hauptzylinder (42) und dem Bremszylinder (38) befindet, und ein Einlassventil (94), das sich zwischen dem Sperrventil (78, 82) und dem Radzylinder befindet, wobei das Einlassventil (94) die Bremskraft am Bremszylinder (38) regeln kann,
wobei die Steuerung (60) in einem ersten Modus die elektronisch gesteuerte Druckerzeugungseinheit (70) betätigen kann, sodass diese entsprechend dem Signal hydraulischen Fluiddruck auf den Bremszylinder (38) ausübt, und
wobei der Hauptzylinder (42) in einem zweiten Modus den Bremszylinder (38) betätigen kann und die Steuerung (60) die elektronisch gesteuerte Druckerzeugungseinheit (70) betätigen kann, um den Hauptzylinder (42) zu ergänzen und die Fluidvolumenkapazität des Hauptzylinders (42) zu erweitern,
wobei das Sperrventil (78, 82) im ersten Modus geschlossen ist, um die Fluidbahn zwischen dem Hauptzylinder (42) und dem Bremszylinder (38) zu blockieren, und wobei das Sperrventil (78, 82) im zweiten Modus geöffnet ist, um die Fluidbahn zwischen dem Hauptzylinder (42) und dem Bremszylinder (38) bereitzustellen.

2. Fahrzeugbremssystem nach Anspruch 1, wobei der Hauptzylinder (42) im zweiten Modus den Bremszylinder (38) proportional zur Benutzereingabekraft betätigen kann.

3. Fahrzeugbremssystem nach Anspruch 1, wobei die elektronisch gesteuerte Druckerzeugungseinheit (70) ein motorbetriebener Kolben (70A) ist.

4. Fahrzeugbremssystem nach Anspruch 3, wobei die Verdrängungsamplitude des motorbetriebenen Kolbens (70A) im zweiten Modus von der Benutzereingabekraft abhängig ist.

5. Fahrzeugbremssystem nach Anspruch 1, wobei das Bremspedal (46) direkt mit dem Hauptzylinder (42) verbunden ist, ohne einen Verstärker dazwischen.

6. Fahrzeugbremssystem nach Anspruch 1, ferner einen Sensor (74A, 74B) umfassend, der der Steuerung (60) das Signal bereitstellen kann, wobei der Sensor ein Drucksensor (74B), ein Pedalwegsensor (74A) oder ein Pedalkraftsensor (74A) ist.

7. Fahrzeugbremssystem nach Anspruch 1, ferner einen Pedalgefühlsimulator (62) umfassend, wobei der Hauptzylinder (42) im ersten Modus in Fluidverbindung mit dem Pedalgefühlsimulator (62) gekoppelt ist.

8. Fahrzeugbremssystem nach Anspruch 1, ferner ein Ventil (86, 90) umfassend, das sich zwischen der elektronisch gesteuerten Druckerzeugungseinheit (70) und dem Bremszylinder (38) befindet, wobei das Ventil (86, 90) im ersten Modus und zweiten Modus geöffnet ist, um eine Fluidbahn zwischen der elektronisch gesteuerten Druckerzeugungseinheit (70) und dem Hydraulikkreislauf (18, 22) bereitzustellen.

9. Fahrzeugbremssystem nach Anspruch 1, wobei die Steuerung (60) als Reaktion auf ein einen Fehler oder eine Fehlfunktion anzeigendes Signal das Bremssystem (10) vom ersten in den zweiten Modus bringen kann.

10. Verfahren zum Betreiben eines Fahrzeugbremssystems, das einen hydraulisch betätigten Bremszylinder (38) aufweist, wobei das Verfahren Folgendes umfasst:
Betreiben des Fahrzeugbremssystems in einem ersten Modus, in dem über eine elektronisch gesteuerte Druckerzeugungseinheit (70) als Reaktion auf das Herunterdrücken eines Bremspedals (46) Fluid auf den Bremszylinder (38) aufgebracht wird,
Identifizieren über eine Steuerung (60), dass das Fahrzeugbremssystem im ersten Modus nicht betrieben werden kann; und
nach dem Identifizieren, dass das Fahrzeugbremssystem im ersten Modus nicht betrieben werden kann, Betreiben des Fahrzeugbremssystems in einem zweiten Modus wie nachfolgend beschrieben, wenn das Bremspedal (46) heruntergedrückt wird:
Öffnen einer Fluidbahn zwischen einem Hauptzylinder (42) und dem Bremszylinder (38) durch ein Sperrventil (78, 82) und ein Einlassventil (94) und dadurch Betätigen des Bremszylinders (38) über den Hauptzylinder (42); und
Betätigen der elektronisch gesteuerten Druckerzeugungseinheit (70) über die Steuerung (60), um die Fluidvolumenkapazität des Hauptzylinders (42) zu erweitern.

11. Verfahren nach Anspruch 10, wobei die Steuerung (60) im zweiten Modus in einem Volumensteuermodus wirkt, um die elektronisch gesteuerte Druckerzeugungseinheit (70) zu betätigen, um ein Fluidvolumen von der elektronisch gesteuerten Druckerzeugungseinheit (70) zu verdrängen.

12. Verfahren nach Anspruch 11, wobei die elektronisch gesteuerte Druckerzeugungseinheit (70) im zweiten Modus betätigt wird, um ein Fluidvolumen auszugeben, das in Abhängigkeit von der Benutzereingabekraft proportional zum Weg des Bremspedals (46) ist.

## Revendications

1. Système de freinage (10) de véhicule, comprenant :
une pédale de frein (46) pouvant fonctionner pour recevoir une force d'entrée d'un utilisateur ;
un cylindre maître (42) couplé en fonctionnement à la pédale de frein (46) pour être actionné par celle-ci ;
un cylindre de frein (38) couplé de façon sélective au cylindre maître (42) par le biais d'un circuit hydraulique (18, 22) ;
une unité de génération de pression à commande électronique (70) séparée du cylindre maître (42) ;
un contrôleur (60) pouvant fonctionner pour recevoir un signal indiquant la force de l'entrée d'utilisateur sur la pédale de freinage (46) ;
un clapet d'isolement (78, 82) situé entre le cylindre maître (42) et le cylindre de frein (38), et
une soupape d'admission (94) située entre le clapet d'isolement (78, 82) et le cylindre de roue, la soupape d'admission (94) pouvant fonctionner pour régler la force de freinage sur le cylindre de frein (38),
dans lequel, dans un premier mode, le contrôleur (60) peut fonctionner pour actionner l'unité de génération de pression à commande électronique (70) pour appliquer une pression de fluide hydraulique au cylindre de frein (38) en fonction du signal, et
dans lequel, dans un second mode, le cylindre maître (42) peut fonctionner pour actionner le cylindre de frein (38) et le contrôleur (60) peut fonctionner pour actionner l'unité de génération de pression à commande électronique (70) pour assister le cylindre maître (42) et étendre une capacité de volume de fluide du cylindre maître (42),
dans lequel, dans le premier mode, le clapet d'isolement (78, 82) est fermé pour bloquer un trajet de fluide entre le cylindre maître (42) et le cylindre de frein (38), et dans lequel, dans le second mode, le clapet d'isolement (78, 82) est ouvert pour fournir le trajet de fluide entre le cylindre maître (42) et le cylindre de frein (38).

2. Système de freinage de véhicule selon la revendication 1, dans lequel, dans le second mode, le cylindre maître (42) peut fonctionner pour actionner le cylindre de frein (38) en proportion de la force de l'entrée d'utilisateur.

3. Système de freinage de véhicule selon la revendication 1, dans lequel l'unité de génération de pression à commande électronique (70) est un piston motorisé (70A).

4. Système de freinage de véhicule selon la revendication 3, dans lequel, dans le second mode, la grandeur du déplacement du piston motorisé (70A) dépend de la force de l'entrée d'utilisateur.

5. Système de freinage de véhicule selon la revendication 1, dans lequel la pédale de frein (46) est directement raccordée au cylindre maître (42) sans surpresseur entre les deux.

6. Système de freinage de véhicule selon la revendication 1, comprenant en outre un capteur (74A, 74B) pouvant fonctionner pour fournir le signal au contrôleur (60), dans lequel le capteur est l'un d'un capteur de pression (74B), d'un capteur de déplacement de pédale (74A) et d'un capteur de force de pédale (74A) .

7. Système de freinage de véhicule selon la revendication 1, comprenant en outre un simulateur de sensation de pédale (62), dans lequel le cylindre maître (42) est couplé en communication hydraulique avec le simulateur de sensation de pédale (62) dans le premier mode.

8. Système de freinage de véhicule selon la revendication 1, comprenant en outre une soupape (86, 90) située entre l'unité de génération de pression à commande électronique (70) et le cylindre de frein (38), dans lequel, dans le premier mode et le second mode, la soupape (86, 90) est ouverte pour fournir un trajet de fluide entre l'unité de génération de pression à commande électronique (70) et le circuit hydraulique (18, 22).

9. Système de freinage de véhicule selon la revendication 1, dans lequel le contrôleur (60) peut fonctionner pour faire passer le système de freinage (10) du premier mode au second mode en réponse à un signal indicatif d'une défaillance ou d'un dysfonctionnement.

10. Procédé de fonctionnement d'un système de freinage de véhicule comportant un cylindre de frein à actionnement hydraulique (38), le procédé comprenant :
le fonctionnement du système de freinage de véhicule dans un premier mode dans lequel un fluide est appliqué au cylindre de frein (38) par le biais d'une unité de génération de pression à commande électronique (70) en réponse à l'enfoncement d'une pédale de frein (46),
l'identification par le biais d'un contrôleur (60) du fait que le système de freinage de véhicule ne fonctionne pas dans le premier mode ; et
suite à l'identification du fait que le système de freinage de véhicule ne fonctionne pas dans le premier mode, le fonctionnement du système de freinage de véhicule dans un second mode comme suit lorsque la pédale de frein (46) est enfoncée :
l'ouverture d'un trajet de fluide entre un cylindre maître (42) et le cylindre de frein (38) par l'intermédiaire d'un clapet d'isolement (78, 82) et d'une soupape d'admission (94), ce qui permet d'actionner le cylindre de frein (38) avec le cylindre maître (42) ; et
l'actionnement de l'unité de génération de pression à commande électronique (70) au moyen du contrôleur (60) pour étendre une capacité de volume de fluide du cylindre maître (42).

11. Procédé selon la revendication 10, dans lequel, dans le second mode, le contrôleur (60) fonctionne dans un mode de contrôle du volume pour actionner l'unité de génération de pression à commande électronique (70) afin de déplacer un volume de fluide depuis l'unité de génération de pression à commande électronique (70).

12. Procédé selon la revendication 11, dans lequel, dans le second mode, l'unité de génération de pression à commande électronique (70) est actionnée pour sortir un volume de fluide proportionnel au déplacement de la pédale de frein (46), en fonction de la force de l'entrée d'utilisateur.
